# EUROPEAN PATENT APPLICATION

(11) **EP 1 524 322 A2**
(43) Date of publication of application: **20.04.2005**
(21) Application number: 04008654.8
(22) Date of filing: 08.04.2004
(51) Int. Cl.: C21C 5/36, C21C 7/00

(54) **Method of liquid steel production with slag recycling in a converter, equipment to employ the method**

(30) Priority: 15.10.2003 CZ 20032815; 24.11.2003 CZ 20033207
(71) Applicant: Milan, Adelt, 27201 Kladno (CZ); Milan, Raclavsky, 70800 Ostrava-Poruba (CZ); Moulis, Vlastimil, 33843 Mirosov (CZ); Gora, Pavel, 73961 Trinec (CZ); Leitner, Ekhard, 1090 Vienna (AT)
(72) Inventor: Milan, Adelt, 27201 Kladno (CZ); Milan, Raclavsky, 70800 Ostrava-Poruba (CZ); Moulis, Vlastimil, 33843 Mirosov (CZ); Gora, Pavel, 73961 Trinec (CZ); Leitner, Ekhard, 1090 Vienna (AT)
(74) Representative: Plicka, Josef

(57) **Abstract**

The invented method consists of the fact that slag from the end of a steelmaking process in a converter is recycled at the beginning of the steel converter process. Once the silicon oxidises, the slag is removed and substituted with new slag made of lime in particular as well as other admixtures, as the case may be. It means that the slag is not removed at the end of the steelmaking process, but in the middle of it. This decreases the amount of the slag due to better utilisation of the refining capacity of the slag and due to a smaller content of iron oxides while preserving desired characteristics of the metal. Application of the process thus increases metal yields. Auxiliary equipment makes slag-off easier.

## Description

### FIELD OF THE INVENTION

The invention concerns a method of and equipment for liquid raw steel production in a top-blown converter. Due to a change in the steel converter process technology, the invention reduces losses of iron in slag at slag off. In order to implement the technology, the converter may be further equipped with technical equipment enabling easier slag-off.

### BACKGROUND OF THE INVENTION

The method of liquid steel production in converters is known. In many cases, this process has been modified to suit local conditions and most importantly raw material sources determining the characteristics, particularly chemical composition, of hot metal.

The following is a usual method of steel production from a mixture of liquid hot metal of a silicon content between 0.3 and 1.2%, a carbon content over 4%, and low contents of phosphorus, with other compounds: Once the charging is completed and the converter is tilted back in the working position, a converter process starts. At the beginning, the top oxygen lance works in the top position (however, this is not a rule) and for a period of approximately 2 to 3 minutes causes oxidation of silicon as well as iron, which has a positive impact on active slag formation. Once the initial phase is completed, the top oxygen lance usually approximates the bath level and lime is added in individual batches simultaneously with the blowing. The process results in a large amount of slag with a relatively high content of iron oxides as well as small-sized metal iron granules. A total iron content in the slag is over 15%. This value is affected by a required carbon content in the bath. The higher the carbon content, the lower the iron content in the slag. Extremely low carbon contents in raw steel result in a substantially higher iron content in the slag. In order to achieve low final carbon contents, it sometimes exceeds 30%. The low carbon contents are required particularly from steel brands with low levels of phosphorus.

Also other processes are known, based for example on hot metal with a high phosphorus content between 1.5 and 2.2%, or 0.5 and 1.0% in the case of lower contents. An important characteristic is hot metal dephosphorisation with relatively high carbon contents in molten metal. The process and particularly manipulation with the slag may help achieve required phosphorus concentrations at the end of the process. Worldwide, the processes to treat phosphorus hot metal are known under the following abbreviations: LD-AC process (used in Belgium and the Benelux countries), OLP process (France) and PL process (used particularly in Germany). The processes have gradually declined with the depletion of iron ore deposits with high phosphorus contents. The core of the processes is utilisation of two or more slags in a converter. After the initial phase of the converter process, the first slag with a high phosphorus content is removed out of the converter (content of phosphorus oxides is up to 25%) and subsequently other slag is formed that gradually eliminates the remaining phosphorus until the phosphorus content in the metal is below 0.02%. In the cases of extremely high phosphorus contents in hot iron, the slag is removed twice in the course of the converter process.

Some processes use simultaneous injection of oxygen from the top along with powdered lime.

In Japan, on the other hand, pre-processed hot metal with reduced contents of silicon, phosphorus and sulphur is used in a wider extent. These accompanying elements need not be eliminated in the course of the steelmaking process as such and thus it is possible to work with a minimum of slag.

In addition to top-blown converters there are also top- and bottom-blown converters. These converters can also be used to process the above raw materials with slight adjustments.

Due to varying prices of scrap (metal waste) and liquid hot metal (product of blast-furnace processes) occasional efforts arise to decrease the specific price of a charge by increasing a proportion of scrap. This is achieved by adding coal or coke to the initial phase of the process, particularly when charging or pouring hot metal in the converter. Such added carbon releases heat when burnt by oxygen and the heat is used to melt down a solid charge, or to heat up a molten substance, as the case may be.

Another way of decreasing the specific price of a charge is adding various waste materials that save quick lime and/or contain larger quantities of iron in both oxidic and metalic forms. The savings achieved by means of waste materials are applied to other aggregates as well. An example is the recycling of slag from a converter in a blast-furnace to substitute for limestone. In addition to indisputable benefits this process has its drawbacks, too. The main drawback is a reduction of phosphorus in the blast-furnace and a subsequent increase in the phosphorus content of the hot metal. This phosphorus content in steel is unacceptable and must be eliminated in the steelmaking process.

In some cases, a part of slag is left in the converter. This slag, perhaps after its chemical composition is changed, is blown by the top lance over the walls of the converter to protect them later in the process.

In Japan they have developed a process of dephosphorisation of hot metal in a converter with a subsequent converter process. The process has been developed by the Nippon Steel Corporation and has been patented in the US and Europe under USP5,868,817 and EP 0714989, respectively. The process features removal of at least 60% of slag after desilication and dephosphorisation. The whole initial converter process is managed so as to avoid temperatures over 1,200 to 1,450°C at the end of the process. This temperature limit decreases the amount of phosphorus re-reduced from the slag. Once desilication and dephosphorisation is completed, the slag and new slag are removed and formed, respectively. The new slag is used in the converter in the course of subsequent decarbonisation and it stays in the converter even after the tapping of steel. The amount of the recycled slag may be up to 30kg/t. To keep the slag basicity under control, a small amount of quick lime is added to the initial stage as a fluxing agent, or limestone - to cool down the slag. The slag basicity is between 0.7 and 2.5. The aim of the above procedure is in particular to simplify hot metal refining and eliminate the need to use additional dephosphorisation equipment.

The above technology solves the issues of hot metal dephosphorisation; it does not take into account the option of scrap pre-heating. An amount of used scrap is limited to 25% with a silicon content around 1%.

Hot metal pre-processing in a converter is used also by the Wakayama Sumitomo Works. This technology features pouring of a molten substance from one converter into another with a simultaneous removal of slag.

There are also patents under US 5,417,740; US 5,286,277 and WO95/35394 describing scrap pre-heating in a steelmaking furnace. In particular, the patents focus on how to extend the possibility of processing scrap in a converter. These patents also describe slag recycling in the converter. The slag formed in the end of one heat is used in the following heat to help form new slag. Removal of the first slag may occur only when the following conditions are met: at least 60% of silicon from hot metal has undergone oxidation and no more than 50% of the total oxygen has been injected. The slag basicity before the first removal is at least 1.4, ideally 2.2. The temperature of the molten substance at the moment of slag-off is at least 111°C, ideally 222°C, below the temperature required for the tapping of steel. Also in this case the chemical composition of slag is altered by adding basic components to the slag before scrap is charged. Because the aim of the patent is to increase the amount of scrap used, particular emphasis is put on a higher degree of the CO burning and its transformation into CO₂.

There are also Czech patents under PV 2003-2815 and PV 2003-3207 that use recycling of all or a major part of slag, which makes it possible to control the slag basicity in the initial stage of the process based upon the knowledge of the composition and quantity of a charge.

Slag-off is a familiar process in the steelmaking industry that was used also in the Siemens-Martin process and in electric arc furnaces in the case of higher phosphorus contents in hot metal and in converters. The need to remove the slag arises from antagonistic requirements put on the slag at various stages of the steelmaking process. The easiest way of how to change the slag characteristics is to replace it at least partially.

All of the above patents adjust slag basicity before hot metal is poured in a converter, they do not interfere with a flow of material in steelworks and in particular with an exchange of material between blast-furnaces and converters. Neither they solve the issue of slag disintegration, nor the issue of its further utilisation. Moreover, the above patents do not deal with the issues of gas collection. Another shortcoming of the above technological procedures is unsolved stabilisation of slag composition in the process and a possibility to control slag basicity in the course of slag-off and steel tapping. The proposed procedures do not take into account final treatment of the metal at the end of the oxygen blowing. The above reasons are likely to cause limited utilisation of the slag-off technology in the middle of the converter process. None of the above patents deal with optimisation of slag-off with respect to the converter gas collection.

According to BAT (Best Available Technique) the amount of slag formed in the course of an LD process is between 85 and 110kg/t, which means 8.5 to 11%. This amount includes neither slag from previous desulphurisation of hot metal, nor slag from secondary metallurgy.

### SUMMARY OF THE INVENTION

The main advantage of the invented method is better utilisation of charged iron in two simultaneous ways: First, by decreasing an amount of slag. Second, by decreasing contents of iron oxides in the slag. The proposed procedure may reduce consumption of input material per ton of liquid steel produced and save more than 1% of metal from the charge. Another improvement dwells in the fact that slag carryover during the tapping of steel is reduced, which helps reduce consumption of alloying additions. The characteristics of removed slag improve usability of the slag due to lower slag disintegration. Slag-off is done in a way that prevents substantial limitation of the possibility to collect the converter gas.

The process is intended for the processing of low-phosphorus hot metals in a top-blown converter, or in a top-blown and bottom-stirred converter. The process is usable for the top-blown and bottom-stirred converter provided that constant blowing prevents penetration of metal or slag to bottom tuyeres.

As compared to the currently used process, elimination of accompanying elements in the converter is done differently. The difference dwells in a removal of slag once the initial oxidation of silicon and phosphorus is completed. New slag with high basicity and high contents of iron oxides is formed in the next phase of the process. This slag or a decisive part of it is left in the converter together with a residue of raw steel and is recycled during the next heat. Basicity of the slag at the end of decarbonisation is controlled according to a silicon content in hot metal intended for the next heat in order to achieve ideal conditions for slag-off after desilication and to minimise wear and tear of the lining. This procedure has yet another advantage: Highly basic slag is less liquid and a risk of slag carryover in the course of steel tapping is reduced. Further reduction of phosphorus may be achieved by limiting slag recycling from the converter through a blast-furnace and thus substantially reducing supply of phosphorus to the blast-furnace and subsequently to the converter as part of hot metal. Final contents of phosphorus are achieved at the end of a heat with a low carbon content under temperatures over 1,550°C and slag basicity over 3.

The slag-off as such must be performed with respect to a converter gas collection. The collection is launched once silicon oxidation is completed and a carbon reaction has started. In this particular moment of time, CO content in the converter gas is at least 50%. According to the type of equipment, the process of collection is completed once 80% to 95% of the required oxygen is injected, or if the CO content is below a minimum required level. The process of opening and closing the gas holder needs a particular moment of time, too. Removal of slag with as much as 50% of the required oxygen injected would lead to substantial losses of the converter gas. Therefore it is necessary to remove slag at the beginning of the process with no more than 35% of the oxygen injected, or at the end of the oxygen injection with at least 70% of the oxygen injected. The slag-off in the first half of the converter process is more useful as due to a lower temperature the slag may have lower basicity, which leads to lime savings and reduced slag formation.

### The converter process may be described as follows:

At the end of a standard technological procedure a converter contains raw steel with a carbon content below 0.1% and a required temperature around 1,640°C. At the same time, the converter contains up to 15% of slag with basicity over 2.5. Within the framework of the proposed procedure, the slag is removed only partially and a half of it is left in the converter. Then scrap is cast on the slag and the liquid residue.

The scrap may be pre-heated with the help of added coal or coke. As soon as hot metal is charged it is possible to continue to inject oxygen, either separately or together with anthracite or coke. At this stage, due to a low temperature and relatively reactive slag from the previous heat, silicon oxidation starts and once it is completed it is followed by phosphorus oxidation. The slag basicity is gradually decreasing and at the same time the slag loses its viscosity. As soon as the silicon is oxidised and a part of the phosphorus, the process of the oxygen blowing is interrupted. The top lance is retracted from the converter and the converter is tilted in a position that allows for slag-off. The slag can flow out spontaneously or be removed with the use of a technical device. The flow-out of the slag may be enhanced by slag foaming by means of added coal with a high content of volatile components, or by increasing the flow of a stirring gas. Such solution, however, may cause subsequent problems with manipulation with the flown-out slag due to its large volume. Mechanical removal or blow-out of the slag by means of an auxiliary jet or a higher flow of the stirring gas is a better solution.

Once the slag is removed, the converter process continues by injecting oxygen from the top. At the same time a small amount of new, highly basic slag is formed. At the end of the process, with a low carbon content, dephosphorisation is completed. The new slag is left in the converter after the metal is teemed, serving as a basis for the formation of slag in the first part of the process. Thus the process may continue depending on operational needs as well as the converter's technical condition. Basicity and particularly liquidity of the slag in this phase of the converter process is controlled by gradual adding of slag-forming admixtures. At the end of the process the slag may be blown over the walls of the converter to protect its lining.

### BRIEF DESCRIPTION OF THE DRAWINGS

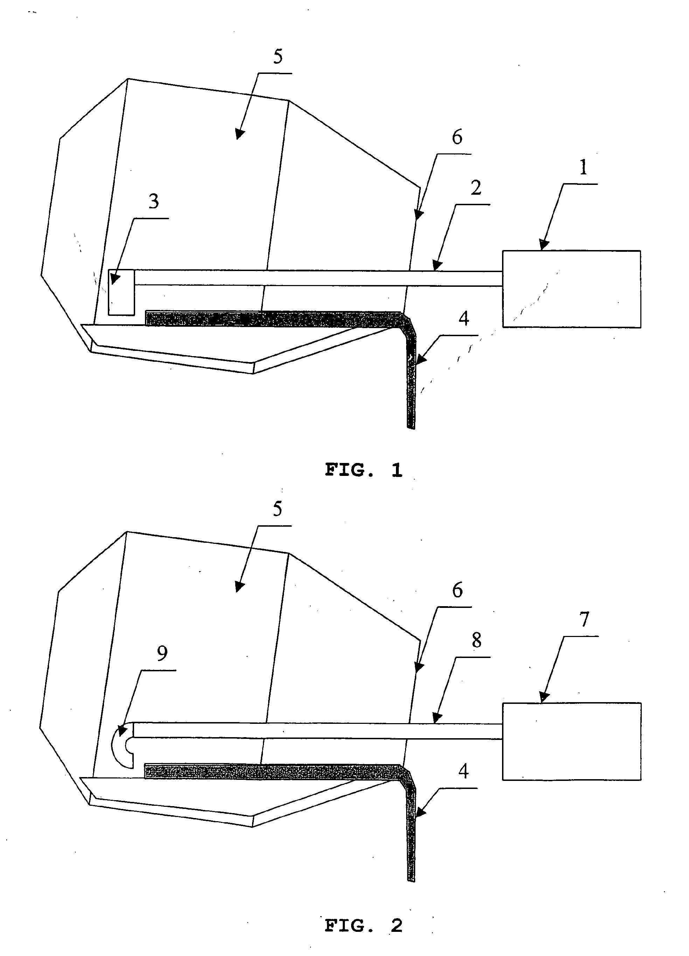

Auxiliary equipment to implement the invention, which, however, is not a necessary prerequisite of the invented production method, is more obvious from the enclosed drawings. Drawings 1 and 2 show slag-off equipment and alternative equipment featuring a jet that helps remove slag from the converter, respectively.

### DETAILED DESCRIPTION OF PREFFERED EMBODIMENTS

### Example 1 (Switching from an existing technology without pre-heating)

In order to explain utilisation of the invented method an example is given of liquid steel production in a converter containing 200 tons of a molten substance. Approximately 10 to 12 tons of slag from the previous heat is left in the converter employing a common technology. Its basicity may be increased, if need be. A part of slag from the previous process 'is left in the converter together with a raw steel residue weighting approximately 5 tons. Scrap may be cast on the slag with the help of a conveyor. The amounts of scrap and hot metal are approximately 50 and 160 tones, respectively. In the course of the converter process, silicon from the hot metal is oxidised first. Products of oxidation react with the slag and decrease its basicity. The basicity decreases and so does slag viscosity. The amount of newly formed slag is around 3 tons. A part of iron oxides is reduced from the slag by silicon and carbon contained in the hot metal. In addition to basicity this reduces a content of easily reducible oxides. The converter process is interrupted before the temperature reaches 1,590 °C, ideally 1,530 °C. Formed slag in an amount of 12 to 14 tons is removed from the converter. Once the converter is tilted back in the working position, the converter process may continue. An amount of 4 tons of lump lime or other slag-forming admixtures is added to the process. The lime together with admixtures and the remaining slag (not removed from the converter) form new slag. The process is completed once the required carbon concentration and temperature have been reached. The tapping of steel follows and all the slag is left in the converter. The fact that all the slag is left in the converter makes it possible to control the slag basicity solely upon the knowledge of the amount and quality of scrap and hot metal and upon the knowledge of the composition and amount of basic slag-forming admixtures.

### Example 2 (Switching between individual heats with slag recycling using scrap pre-heating)

This example features a converter where all slag from a previous heat using a slag recycling technology has been left in an amount of approximately 8 to 10 tons. The slag from the previous process is left in the converter together with a raw steel residue weighting approximately 5 tons. Scrap may be cast on the slag with the help of a conveyor. The amount of scrap is approximately 65 tons. The converter is tilted in its working position and coal is injected together with oxygen. This is to pre-heat the scrap. Subsequently, 145 tons of hot metal is poured in the converter. During the converter process, silicon from the hot metal undergoes oxidation first. Products of oxidation react with the slag and decrease its basicity. The basicity decreases and so does slag viscosity. The amount of newly formed slag is around 2.5 tons. A part of iron oxides is reduced from the slag by silicon and carbon contained in the hot metal. In addition to basicity this reduces also a content of easily reducible oxides. The converter process is interrupted before the temperature reaches 1,590°C, or ideally 1,530°C. Formed slag in an amount of 8 to 11 tons is removed from the converter. Once the converter is tilted back in the working position, the converter process may continue. An amount of 3 tons of lump lime and other admixtures containing MgO are added to the process. The lime together with the remaining slag (not removed from the converter) form new slag. The process is completed when the required carbon concentration and temperature have been reached. The tapping of steel follows and all the slag and a part of the metal is left in the converter. The steelmaking process then continues as needed. The fact that all the slag is left in the converter makes it possible to control the slag basicity solely upon the knowledge of the amount and quality of scrap and hot metal and upon the knowledge of the composition and amount of basic slag-forming admixtures.

### Example 3 (Solution of a problem of steel with an excessive phosphorus content)

If a too high concentration of phosphorus in the metal has been established in the course of a chemical analysis of raw steel composition, the issue may be solved by an additional oxygen injection. The converter is tilted back in the working position and a brief additional oxygen injection with added lime, if need be, is performed. Once the additional injection is completed, further oxidation of the bath occurs which forms better conditions for phosphorus oxidation. Be aware that the temperature may increase in the course of the process. With 300 Nm³ of injected oxygen, the temperature will increase by approximately 5°C.

### Examples of Equipment Design

Drawing 1 shows that the converter may be alternatively equipped with a device to manipulate the slag remover. Auxiliary equipment to employ the invented method consists of a manipulator 1, an arm 2 of the manipulator and a rake 3 removing slag 4 from the converter 5 through the opening of top cone 6 of the converter.

Slag-off may be accelerated with the help of an auxiliary jet depicted in drawing 2. Therefore, alternative auxiliary equipment to employ the invented method consists of a manipulator 7, an arm 8 of the jet and the jet 9 that with the help of a gas flow removes slag 4 from the converter 5 through the opening of top cone 6 of the converter.

## Claims

1. A method of liquid steel production in a converter, **characterized in that** all slag or at least 60% of the slag from the end of the process is recycled at the beginning of the process; a new charge consisting of scrap, hot metal with a phosphorus content below 0.2% and a solid carbonaceous fuel for pre-heating, as the case may be, is cast on the slag; the charging and pre-heating, if any, is followed by the converter process that in its initial phase results particularly in the oxidisation of silicon and other components of the charge, as the case may be; the slag basicity gradually decreases to values around 1.2 in an ideal case and below 2.0 in any case, in a moment suitable in terms of gas collection the converter is tilted and the slag is removed at the beginning of the process with no more than 40% of oxygen injected and with a temperature of the molten substance below 1,490°C, or at the end of the oxygen injection with at least 70% of the oxygen injected and with a temperature of the molten substance below 1,590°C; the slag flows out of the converter spontaneously, or is removed with the help of a jet or a rake, or by means of an increased flow of a stirring gas; in this particular moment the slag contains less than 20% of iron and the amount of slag leaving the process is below 8.5% as compared to the amount of molten iron; new slag with basicity over 3 is formed after the removal of the original slag, the new slag is formed from residues of the non-removed slag by means of added lime and perhaps other admixtures, such as dolomite or other admixtures containing MgO and at the same time the converter process of the molten substance continues until a required carbon content and a required temperature are reached; the tapping of raw steel from the converter follows, the slag is left in the converter and the process continues as described above.

2. The method of Claim 1, **characterized in that** the first phase of dephosphorisation by the slag from the end of the process with high phosphorus contents in the metal is followed by the second phase that involves dephosphorisation by newly formed, highly basic slag upon low phosphorus contents, carbon contents below 0.3% and relatively high temperatures over 1,580°C.

3. The method of Claims 1 or 2, **characterized in that** the slag basicity is controlled upon slag basicity checks based on the knowledge of an amount and quality of scrap and hot metal as well as a composition and amount of basic slag-forming admixtures; at the same time, the control of slag basicity is ensured by the knowledge of slag weight in the individual phases of the melting process.

4. The method of Claims 1, 2 or 3, **characterized in that** a small amount of metal is left in the process, improving the quality of slag-free tapping.

5. The method of any of Claims 1 through 4, **characterized in that** the removed slag does not contain free lime and consists mostly of calciumsilicate and dicalciumsilicate, which is stable and thus the slag does not disintegrate.

6. The method of any of Claims 1 through 5, **characterized in that** should the need arise to achieve low concentrations of phosphorus in steel, an amount of steelmaking slag added to the blast-furnace is reduced to reduce the phosphorus content in hot metal by at least 15%.

7. The method of any of Claims 1 and/or 2, **characterized in that** the slag remaining in the converter is cooled down below solidification temperature before hot metal is charged.

8. The method of any of Claims 1 through 6, **characterized in that** the measurement of CO content in discharged gases and/or the measurement of oxygen consumed by the converter process is used to control the slag-off.

9. The equipment to employ the method of Claim 1, **characterized in that** alternatively, a converter is equipped with a slag remover manipulator, which consists of a manipulator as such (1), an arm (2) of the manipulator and a rake (3) to remove slag (4) from the converter (5) through the opening of top cone (6) of the converter, or the converter is equipped with an auxiliary jet consisting of a jet manipulator (7), an arm (8) of the jet and the jet (9) that with the help of a gas flow removes slag (4) from the converter (5) through the opening of top cone (6) of the converter.

10. The equipment to employ the method of Claim 9, **characterized in that** both the auxiliary rake (3) and the auxiliary jet (9) are separately changeable.
